# EUROPÄISCHE PATENTANMELDUNG

(11) **EP 1 160 137 A2**
(43) Veröffentlichungstag der Anmeldung: **05.12.2001**
(21) Anmeldenummer: 00124957.2
(22) Anmeldetag: 16.11.2000
(51) Int. Cl.: B60R 21/20

(54) **Airbagmodul mit einem Gasgenerator als Schwingungsdämpfermasse**

(30) Priorität: 21.01.2000 DE 10002480
(71) Anmelder: Firma Carl Freudenberg, 69469 Weinheim (DE)
(72) Erfinder: Back, Friedrich, 79379 Müllheim (DE); Dürre, Markus, 79379 Müllheim (DE)

(57) **Zusammenfassung**

Airbagmodul für ein Kraftfahrzeuglenkrad mit einem Airbaggehäuse und einem an da Airbaggehäuse radial zur Lenkradachse beweglich angeschlossenen, die Funktion einer Schwingungsdämpfermasse übernehmenden Gasgenerator, wobei der Gasgenerator (1) über ein mit mindestens drei Gummistegen (5) versehendes, als Ringscheibe ausgebildetes Adapterblech (12) mit dem Airbaggehäuse (3) verbunden ist.

## Beschreibung

### Technisches Gebiet

Die Erfindung betrifft ein Airbagmodul für Kraftfahrzeuglenkrad mit einem Airbaggehäuse und einem an das Airbaggehäuse radial beweglich angeschlossenen, die Funktion einer Schwingungsdämpfermasse übernehmenden Gasgenerator.

Bei Kraftfahrzeugen können während der Fahrt oder auch im Stillstand mit laufendem Motor Schwingungen auftreten, die sich auf die Lenksäule und das Lenkrad übertragen. Um diesen Schwingungen am Lenkrad entgegenzuwirken und den Fahrkomfort zu verbessern, sind Schwingungstilger entweder direkt an der Lenksäule oder im Lenkrad unterhalb des dort angeordneten Airbagmoduls angebracht worden. Neuere Lösungen beziehen das Airbagmodul oder auch den Gasgenerator des Airbags als Schwingmasse ein.

### Stand der Technik

Aus der britischen Patentanmeldung GB 2 325 900 ist eine Lösung bekannt, bei der das gesamte Airbagmodul als Schwingmasse benutzt wird und federnd am Lenkrad befestigt ist. Eine solche Lösung hat jedoch zur Folge, daß die Abdeckung des Airbagmoduls mitschwingt und dadurch eine störende Bewegung im Blickfeld des Fahrers entsteht.

Eine andere Anordnung ist in dem Gebrauchsmuster DE 298 16 925 gezeigt, bei der das Airbagmodul in einer Art Einfassung eingesetzt ist, die von einer Kappe abgedeckt ist. Das Airbagmodul ist federnd über elastische Elemente an einem Verbindungsblech gelagert. Die Lösung ist jedoch auch nicht voll befriedigend, da auch hier wie bei dem voranstehenden Beispiel der Luftsack vom Gasgenerator durch die vorhandenen Schwingungen beschädigt werden kann.

In der DE 39 25 761 A1 ist eine Konstruktion offenbart, bei der entweder das Airbagmodul oder ein Teil davon, in diesem Fall der Gasgenerator, als Trägheitsmasse verwendet werden. Für den Fall, daß der Gasgenerator die Trägheitsmasse ist, wird der Gasgenerator von einem Diffuseur umgeben, der verhindert, daß der Airbag und der Gasgenerator in Kontakt miteinander kommen, um dadurch Beschädigungen am Airbag zu vermeiden und die Beweglichkeit des Gasgenerators nicht zu behindern. Nachteilig ist bei dieser Lösung, daß die gewählten Verbindungsmittel zwischen dem Gasgenerator und dem Airbaggehäuse Schrauben oder Nieten mit elastischen Manschetten sind, die nur kleine Schwingungsamplituden für den Gasgenerator zulassen. Das elastische Verformungsvermögen der benutzten Mittel wird durch die eigentlichen Verbindungsmittel, den Nieten und Schrauben, stark eingeschränkt.

Eine andere, in dem DE-Gebrauchsmuster 299 02 033 offenbarte Lösung besteht in einem am Gasgeneratorträger angeordneten ringförmigen Montageblech, einem mit dem Gehäuse des Gasgenerators verbundenen umlaufenden Montageflansch sowie einem parallel zur Lenkradachse ausgerichteten Montagezylinder aus einem elastischen Werkstoff, dessen freie Ränder einerseits mit dem Montageblech und andererseits mit dem Montageflansch verbunden sind. Durch konstruktive Gestaltung und Materialauswahl kann der Montagezylinder an unterschiedliche Bedürfnisse angepaßt werden, so daß die vom Fahrzeugtyp zu Fahrzeugtyp unterschiedlichen Vibrationen wirksam unterdrückt werden können. Bei dieser Lösung ist jedoch auch nicht ausgeschlossen, daß der Gasgenerator an die Wand des Abstandstopfes anschlägt und bei zu hohen Beschleunigungen zerstört wird. Selbst wenn eine Zerstörung nicht eintritt, sind die beim Anschlagen des Gasgenerators an die Wand des Abstandstopfes entstehenden Geräusche äußerst lästig.

### Darstellung der Erfindung

Der Erfindung liegt die Aufgabe zugrunde, eine konstruktive Ausbildung für das Airbagmodul zu finden, bei dem die genannten Nachteile vermieden werden. Der Gasgenerator des Airbagmoduls soll als Schwingungsdämpfermasse dienen, jedoch so aufgehängt sein, daß seine Beschädigung ausgeschlossen. Darüber hinaus sollen auch lästige Geräusche vermieden werden. Schließlich soll die Verbindung einfach und leicht herstellbar sein.

Die Lösung der gestellten Aufgabe wird bei einem Airbagmodul der eingangs genannten Gattung erfindungsgemäß dadurch erreicht, daß der Gasgenerator über ein mit mindestens drei Gummistegen versehenes, als Ringscheibe ausgebildetes Adapterblech mit dem Airbaggehäuse verbunden ist. Der zur Anwendung gelangende Gasgenerator hat einen umlaufenden Befestigungsflansch, mit dem er mit dem Adapterblech gasdicht verbunden ist. Dieses kann beispielsweise durch eine Schraubverbindung geschehen. Die gasdichte Verbindung ist deshalb erforderlich, damit die bei der Auslösung des Airbags entstehenden Gase nicht in ungewollte Richtungen entweichen können. Gegebenenfalls können auch der Befestigungsflansch und das Adapterblech als ein integrales Teil ausgebildet sein.

Die Gummistege sind ständerartig am Adapterblech befestigt. An ihren abstehenden Enden sind sie mit Befestigungslaschen versehen, über die sie am Airbaggehäuse angeschlossen werden können. Die Befestigung der Gummistege mit dem Adapterblech und den Befestigungslaschen wird durch Vulkanisation erreicht. Möglich ist auch eine formschlüssige Verbindung, beispielsweise durch Einknüpfen.

Auf der anderen Seite des Adapterblechs, den Gummistegen abgewandt, ist eine umlaufende axial hervorstehende, aus elastischem Material bestehende Dichtlippe angeordnet. Diese Dichtlippe wirkt mit einer am Airbaggehäuse angebrachten Ringwand zusammen und zwar derart, daß zwischen der Dichtlippe und der Ringwand ein Abstand vorhanden ist, welcher dem Gasgenerator die genügende Schwingfreiheit gibt, der jedoch bei einem durch die Gasexplosion entstehenden Druck von der Dichtlippe überdeckt wird, so daß der Ringraum zwischen Dichtlippe und Ringwand geschlossen wird und keine Gase nach außen austreten können.

Der Ringspalt zwischen der Dichtlippe und der zugehörigen Ringwand des Airbaggehäuses ist so dimensioniert, daß die Dichtlippe in Zusammenwirkung mit der Ringwand auch als Anschlagstopper für den Schwingweg des Gasgenerators dient.

Die Ringwand kann ein gesondertes, am Airbaggehäuse angebrachtes Teil sein. Es ist günstig, wenn der äußere Rand der Dichtlippe zu einem elastischen Spitzrand ausgebildet ist, mit dem sie an der Ringwand direkt anliegt. Ein solcher Spitzrand behindert die Schwingbewegung des Gasgenerators in keinster Weise, bildet jedoch im Fall einer Generatorauslösung einen dichten Abschluß für die Gase.

Die Dichtlippe wird wie die Gummistege an das Adapterblech anvulkanisiert. Der Vulkanisiervorgang für die Gummistege und die Dichtlippe wird in einem Arbeitsgang durchgeführt.

Möglich sind auch andere Ausbildungen und Anordnungen der Dichtlippe. Als günstig hat sich eine Anbringung der Dichtlippe an der Ringwand des Airbaggehäuses erwiesen. Die Dichtlippe besteht dann aus einer aus einem elastischen Material hergestellten umlaufenden radialen Dichtlippe, die mindestens teilweise in radialer Richtung das Adapterblech überdeckt. Bei einer Auslösung des Gasgenerators wird die Dichtlippe in axialer Richtung an das Adapterblech gepreßt und verhindert so, daß Gase ungewollt nach außen austreten können. Die Dichtlippe wird mit geringem axialem Abstand zum Adapterblech angebracht, damit bei den normalerweise auftretenden Schwingungen des Gasgenerators keine Berührung zwischen der Dichtlippe und dem Adapterblech gegeben ist. Die Anbringung der Dichtlippe erfolgt vorzugsweise am unteren Rand der Ringwand des Airbaggehäuses.

Es ist angebracht, wenn der Gasgenerator in den Gehäuseboden des Airbaggehäuses hineinragt und durch einen Diffusor abgedeckt ist.

### Kurzbeschreibung der Zeichnung

Es zeigt
- Fig. 1: eine Draufsicht auf ein geöffnetes Airbaggehäuse, wobei auf der rechten Seite der Fig. auch der Airbaggehäuseboden entfernt worden ist und eine axiale Dichtlippe zur Anwendung kommt,
- Fig. 2: das Airbagmodul der Fig. 1 im Längsschnitt gemäß der Linie A-A,
- Fig. 3: einen Längsschnitt durch das Airbagmodul der Fig. 1 gemäß der Linie B-B und
- Fig. 4: einen Längsschnitt durch ein Airbagmodul mit einer radialen Dichtlippe.

### Ausführung der Erfindung

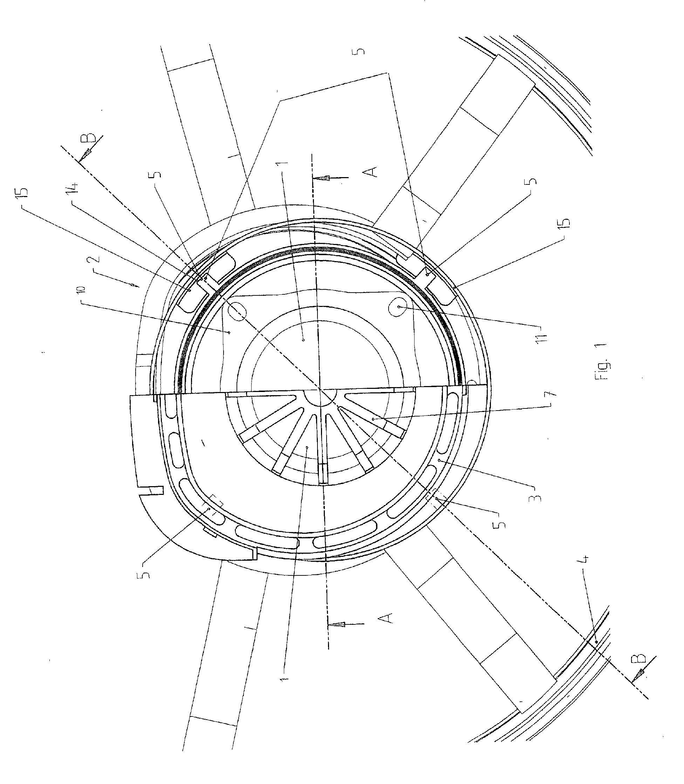

In der Fig. 1 ist in der Draufsicht die Anordnung und Befestigung des Gasgenerators 1 im Airbagmodul 2 gezeigt. Das Airbagmodul 2 besteht in an sich bekannter Weise im wesentlichen aus dem Airbaggehäuse 3, dem Gasgenerator 1, dem Gassack und einem das Airbaggehäuse 3 abschließenden Deckel. In den nachfolgenden Fig. 1 bis 4 sind der Gassack und der Abschlußdeckel weggelassen, da diese beliebiger Bauart sein können. Das Airbaggehäuse 3 ist am angedeuteten Lenkrad 4 in geeigneter Weise befestigt. Der Gasgenerator 1 dient als Schwingungsdämpfermasse. Hierfür ist er federnd mit dem Airbaggehäuse 3 über vier Gummistege 5 verbunden. Auf der linken Seite der Fig. 1 ist der Gehäuseboden 6 und der Diffusor sichtbar. Der Diffusor besteht aus den Streben 7, die sternförmig von einem Mittelring 8 ausgehen. Unterhalb der Streben 7 liegt der Gasgenerator 1, der in den Gehäuseboden 6 eingefügt ist.

Auf der rechten Seite der Fig. 1 ist der Gasgenerator 1 sichtbar, der den umlaufenden Befestigungsflansch 9 hat. Der Befestigungsflansch 9 ist mit vier nach außen abstehenden Laschen 10 versehen. Über in die Laschen 10 einsetzbare Schraubverbindungen 11 wird die Verbindung zu dem Adapterblech 12 hergestellt. Das Adapterblech 12 hat die Form einer Ringscheibe und ist gasdicht mit dem Befestigungsflansch 9 des Gasgenerators 1 verbunden. Das Adapterblech 12 ist mit den Lappen 14 versehen, an die die Gummistege 5, auf der Fig. gesehen nach unten weisend, angebracht sind. An die nach unten weisenden Enden der Gummistege 5 schließen Befestigungslaschen 15 an, über welche der Gasgenerator 1 letztlich mit dem Airbaggehäuse 3 verbunden wird. Die Gummistege 5 ihrerseits sind mit den Lappen 14 und den Laschen 15 durch Vulkanisation verbunden. Auf dem Adapterblech 12 ist die axial nach oben vorstehende Dichtlippe 20 angebracht.

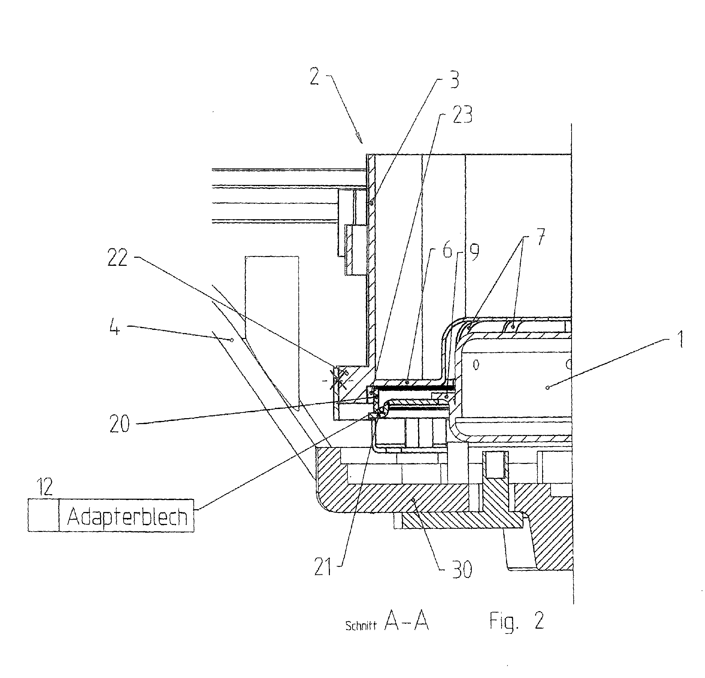

Die Fig. 2 zeigt halbseitig einen Längsschnitt gemäß der Linie A-A der Fig. 1. Der im Gehäuseboden 6 eingefügte Gasgenerator 1 besitzt den umlaufenden Flansch 9, der gasdicht auf dem Adapterblech 12 aufliegt. Auf dem nach außen weisenden Rand 21 des Adapterblechs 12 ist die Dichtlippe 20 angebracht. Der Gehäuseboden 6 ist mit einem nach unten weisenden Ring 22 ausgestattet. Ring 22 und Dichtlippe 20 haben etwa die gleiche Höhe. Zwischen dem Ring 22 und der Dichtlippe 20 ist ein Ringspalt 23 vorhanden, der eine ausreichende Schwingbewegung des Gasgenerators 1 zuläßt. Der Ringspalt 23 ist so bemessen, daß bei zu großen Ausschlägen des Gasgenerators 1 die Dichtlippe 20 an der Ringwand 22 zum Anliegen kommt und dadurch den Schwingweg des Gasgenerators 1 begrenzt.

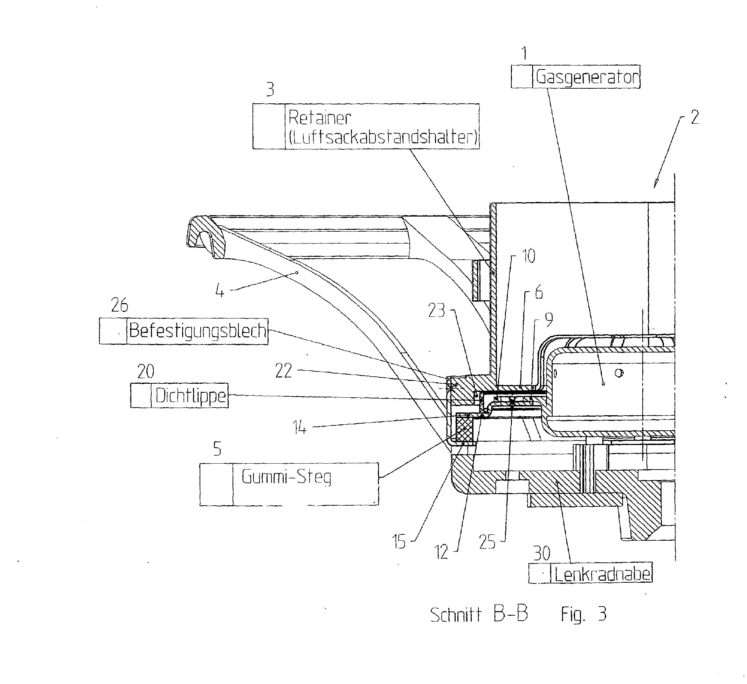

Die Fig. 3 zeigt einen Längsschnitt durch das Airbagmodul gemäß der Linie B-B der Fig. 1. Sichtbar ist hier eine Lasche 10 des Befestigungsflansches 9 des Gasgenerators 1. Über die Schrauben 25 sind die Laschen 10 mit dem Adapterblech 12 verbunden. Die auf dem Adapterblech 12 anvulkanisierte Dichtlippe 20 ist gegenüber der Ringwand 22 angebracht und zwischen ihnen ist der Ringspalt 23. An den Lappen 14 des Adapterblechs 12 sind die Gummistege 5 anvulkanisiert. Ihre Größe und Material wird entsprechend der gewollten Dämpfung ausgewählt. An der Unterseite der Gummistege 5 befinden sich die Befestigungslaschen 15, die winkelförmig ausgebildet sind. Der nach oben weisende Winkel 26 wird über eine Schraubverbindung mit dem Airbaggehäuse 3 verschraubt. Das Airbagmodul 2 ist als Einheit ausgebildet und wird in das Lenkrad 4 beziehungsweise die Lenkradnabe 30 eingesetzt und darin befestigt.

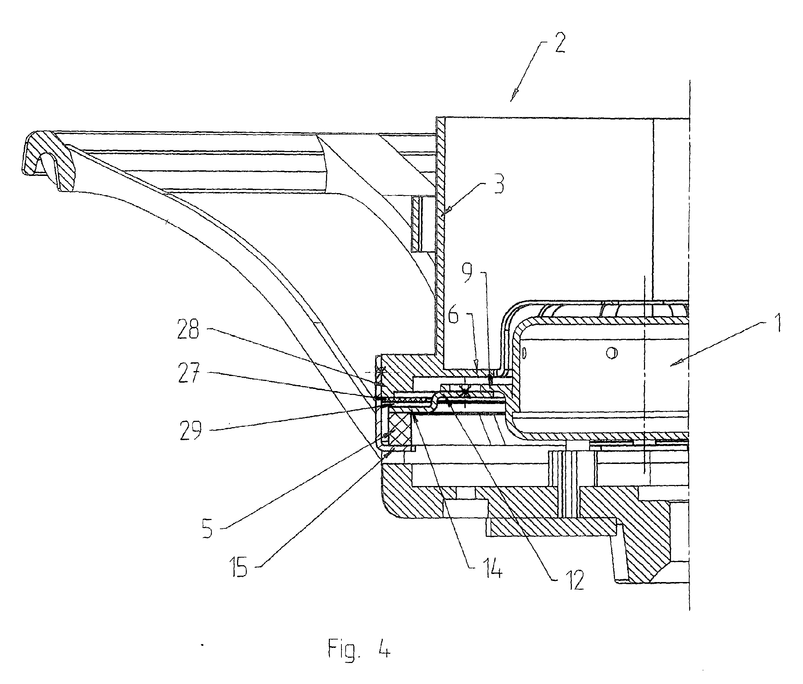

Die Fig. 4 zeigt einen Längsschnitt durch ein Airbagmodul 2, bei dem die Dichtlippe 27 radial ausgerichtet ist. Der Längsschnitt entspricht dem Längsschnitt der Fig. 3, so daß die Gummistege 5 sichtbar sind. Der Aufbau vom Gasgenerator 1, Airbaggehäuse 3, Befestigungsflansch 9 und Adapterblech 12 mit Lappen 14 sowie Befestigungslaschen 15 ist vergleichbar mit der Fig. 3. Abweichend ist die Ausbildung und Anordnung der Dichtlippe 27. Letztere besteht aus einem radial ausgerichteten Gummiring, der an einem Absatz 28 am Boden 6 des Airbaggehäuses 3 angeklebt ist. Nach Auslösung des Gasgenerators 1 drücken die Gase die Dichtlippe 27 an das Adapterblech 12 und der Spalt 29 zwischen der Dichtlippe 27 und dem Adapterblech 12 wird abgedichtet. Der zwischen Dichtlippe 27 und Adapterblech 12 bestehende Spalt 29 ist so bemessen, daß zwischen den Teilen keine Reibung bei normalem Schwingungsbereich stattfindet.

## Patentansprüche

1. Airbagmodul für ein Kraftfahrzeuglenkrad mit einem Airbaggehäuse und einem an das Airbaggehäuse radial zur Lenkradachse beweglich angeschlossenen, die Funktion einer Schwingungsdämpfermasse übernehmenden Gasgenerator, dadurch gekennzeichnet, daß der Gasgenerator (1) über ein mit mindestens drei Gummistegen (5) versehendes, als Ringscheibe ausgebildetes Adapterblech (12) mit dem Airbaggehäuse (3) verbunden ist.

2. Airbagmodul nach Anspruch 1, dadurch gekennzeichnet, daß der Gasgenerator (1) einen umlaufenden Befestigungsflansch (9) hat.

3. Airbagmodul nach einem der Ansprüche 1 oder 2, dadurch gekennzeichnet, daß das Adapterblech (12) mit dem Befestigungsflansch (9) des Gasgenerator (1) gasdicht verbunden ist.

4. Airbagmodul nach einem der Ansprüche 1 bis 3, dadurch gekennzeichnet, daß der Befestigungsflansch (9) und das Adapterblech (12) ein integrales Teil bilden.

5. Airbagmodul nach einem der Ansprüche 1 bis 4, dadurch gekennzeichnet, daß die Gummistege (5) ständerartig vom Adapterblech (12) abstehen.

6. Airbagmodul nach einem der Ansprüche 1 bis 5, dadurch gekennzeichnet, daß die Gummistege (5) an ihren abstehenden Enden mit Befestigungslaschen (15) versehen sind.

7. Airbagmodul nach einem der Ansprüche 1 bis 6, dadurch gekennzeichnet, daß die Gummistege (5) mit dem Adapterblech (12) und / oder den Befestigungslaschen (15) durch Vulkanisation verbunden sind.

8. Airbagmodul nach einem der Ansprüche 1 bis 7, dadurch gekennzeichnet, daß das Adapterblech (12) eine umlaufende axial hervorstehende, aus elastischem Material bestehende Dichtlippe (20) hat.

9. Airbagmodul nach einem der Ansprüche 1 bis 8, dadurch gekennzeichnet, daß die Dichtlippe (20) mit einer am Airbaggehäuse (3) angebrachten Ringwand (22) zusammenwirkt.

10. Airbagmodul nach einem der Ansprüche 1 bis 9, dadurch gekennzeichnet, daß die Dichtlippe (20) mit Abstand von der Ringwand (22) angeordnet ist.

11. Airbagmodul nach einem der Ansprüche 1 bis 10, dadurch gekennzeichnet, daß die Dichtlippe (20) in Zusammenwirkung mit der Ringwand (22) als Anschlagstopper für den Schwingweg des Gasgenerator (1) dient.

12. Airbagmodul nach einem der Ansprüche 1 bis 11, dadurch gekennzeichnet, daß die Ringwand (22) durch eine Ausnehmung am Airbaggehäuse (3) gebildet ist.

13. Airbagmodul nach einem der Ansprüche 1 bis 12, dadurch gekennzeichnet, daß der äußere Rand der Dichtlippe einen elastischen Spitzrand hat, mit dem sie an der Ringwand (22) anliegt.

14. Airbagmodul nach einem der Ansprüche 1 bis 13, dadurch gekennzeichnet, daß die Dichtlippe (20) an das Adapterblech (12) anvulkanisiert ist.

15. Airbagmodul nach einem der Ansprüche 1 bis 7, dadurch gekennzeichnet, daß die Ringwand (22) des Airbaggehäuses (3) mit einer aus einem elastischen Material bestehenden umlaufenden radialen Dichtlippe (27) versehen ist, die mindestens teilweise das Adapterblech (12) überdeckt.

16. Airbagmodul nach Anspruch 15, dadurch gekennzeichnet, daß die Dichtlippe (27) mit Abstand zum Adapterblech (12) angeordnet ist.

17. Airbagmodul nach einem der Ansprüche 15 oder 16, dadurch gekennzeichnet, daß die Dichtlippe (27) an den unteren Rand ( ) der Ringwand (3) angeklebt ist.

18. Airbagmodul nach einem der Ansprüche 1 bis 17, dadurch gekennzeichnet, daß der Gasgenerator (1) in den Gehäuseboden (6) des Airbaggehäuses (3) hineinragt und durch einen Diffusor abgedeckt ist.
